# EUROPEAN PATENT SPECIFICATION

(11) **EP 2 895 899 B1**
(45) Date of publication and mention of the grant of the patent: **15.08.2018**
(21) Application number: 13763287.3
(22) Date of filing: 13.09.2013
(51) Int. Cl.: G02B 6/122, B82Y 20/00, C08J 5/18

(54) **METHOD FOR FORMING PHOTONIC CRYSTAL MATERIALS**
VERFAHREN ZUR HERSTELLUNG VON PHOTONENKRISTALLMATERIALIEN
PROCÉDÉ DE FORMATION DE MATIÈRES À CRISTAUX PHOTONIQUES

(30) Priority: 13.09.2012 GB 201216318
(43) Date of publication of application: 22.07.2015
(73) Proprietor: De La Rue International Limited, Basingstoke, Hampshire RG22 4BS (GB)
(72) Inventor: ARSENAULT, Andre, Toronto, Ontario M5S 3H6 (CA); CHENG, Alison Y., Toronto, Ontario M5S 3H6 (CA)
(74) Representative: Gill Jennings & Every LLP
(86) International application number: PCT/GB2013/052396
(87) International publication number: WO 2014/041360

(56) References cited:
- CN-A- 101 428 493
- JP-A- 2004 117 456
- JP-A- 2006 167 855
- KR-B1- 100 764 826
- US-A1- 2010 133 546
- US-A1- 2010 150 511
- US-A1- 2012 161 431

## Description

### Field of the Invention

The present invention relates to a method of forming photonic crystal materials having an "inverse opal" structure.

### Background to the Invention

Photonic crystals are structured optical materials in which the refractive index varies periodically in one, two or three dimensions. These materials exhibit a range of interesting optical effects arising from the interaction of electromagnetic radiation of a wavelength comparable to the spatial modulation of the refractive index. "Bragg" reflection may occur over a range of wavelengths that depends on the direction of incidence/propagation and the periodicity of refractive index variation. This gives rise to photonic 'energy gaps' that are analogous to the electronic band gaps in semiconductors. Typically, electromagnetic waves within a certain frequency range experience inhibited propagation in particular directions within the crystal, and incident electromagnetic radiation at these wavelengths is consequently reflected back in a specular (mirror-like) geometry. It is the presence of such partial photonic band gaps that gives rise to the shimmering colours observed in opal gemstones. There is an increasing interest in the use of such photonic crystal materials in various applications. For example the beneficial use of photonic materials has been proposed in various optical applications. More recently, there has been a recognition that certain photonic crystal materials may find utility in security applications due to the unusual and striking optical effects that can be demonstrated to an observer, such effects being extremely difficult to counterfeit by alternative techniques.

There exist two well-documented methods of fabricating structures with the necessary highly ordered variation in refractive index - microfabrication and self-assembly. Due to the complexity of microfabrication considerable effort has been devoted to investigating self-assembling systems comprising submicron three-dimensional arrays of dielectric spheres. Such photonic crystals are formed by allowing a colloidal suspension of identically sized spheres to settle slowly under the influence of gravity or by the application of an external force such that spheres naturally order. One well-known example is the fabrication of synthetic opal structures where uniformly sized sub-micron silica spheres are organised through a sedimentation process into a face-centred cubic crystal structure.

Further enhancements to this technique have been developed such that the synthetic opal acts as a precursor or template to further customise the structure. It has been shown that it is possible to use such systems as templates to realise materials known as inverted opals or "inverse opals". The term "inverse opal" may be thought of as a periodic array of voids in a matrix material. The voids are thus generally of a less complex geometry (for example they may be generally spherical) than the adjacent regions of the matrix which surround the voids. As will be understood it is the periodicity of the structure formed by the combination of the voids and the surrounding matrix which gives rise to the photonic effects. The voids may be interconnected nevertheless through small interconnection channels and are usually filled with air. In known inverse opal structures, typically an array of spheres is provided and the interstices between the spheres are first filled with materials of a high refractive index. The spheres are then dissolved by chemical means to give a material that consists generally of air spheres separated by a uniform matrix of the high refractive index material. Whilst inverse opal structures are often mentioned as an aside in the discussion of conventional "opal" structures, in practice there has been a strong prejudice in the art towards the development of the more conventional - particle array - matrix structure. The explanation for this is that inverse opal structures are very difficult to fabricate because they usually involve the production of a particle-matrix structure as part of their fabrication process, followed by the dissolving of the particles to leave voids.

The accurate and widespread dissolution of particles throughout a three-dimensional structure causes a number of technical challenges. These centre upon how to etch the particle material away in a homogeneous manner without disrupting the periodic order of the material and, in more detail, how to ensure that the etchant has pathways into the interior of the structure and that waste products are removed without interfering with the etching process. This is a significant problem and one which has deterred many from researching inverse opals. To date the approach to forming inverse opal structures has been to fabricate a photonic crystal material upon a substrate and then to immerse the whole structure in an etchant material. For example, US20100150511 describes the deposition of spheres on an initial substrate, the infiltration and curing of excess monomer (which is converted into polymer), followed by physical removal of the excess polymer. Etching is then performed and the porous membrane "floats" off the initial substrate and is later collected on a different substrate. JP 2006-167855 describes another method of forming inverse opal photonic crystal structures and devices. There is a strong desire within the technical field of inverse opal fabrication to provide an improved method whereby such inverse opal structure can be more readily and reliably produced. It is in this context that the invention finds advantage.

### Summary of the Invention

In accordance with the invention we provide a method of forming a photonic crystal material having an inverse opal structure, comprising:
a) generating an array of particles on a first substrate, the array including interstices between the particles for the receipt of a matrix material;
b) bonding the particles to each other so as to fix the relative positions of the particles with respect to each other;
c) providing a matrix material to at least partially fill the interstices;
d) attaching a second substrate to the array such that the array is positioned between the first and second substrates;
e) fixing the position of the matrix material with respect to the particles;
f) detaching at least one of the first or second substrates from the array so as to expose a respective contact surface of the array; and,
g) applying an etching agent to the contact surface, said etching agent being adapted to remove material of the particles so as form the inverse opal structure.

We have realised that, whilst in the past, immersion techniques have allowed a high surface area to be presented with etchant, in fact this is actually disadvantageous because the "quality" of such surfaces causes inhomogeneities. In the present invention, we produce inverse opal materials in a more controlled manner. We produce a high quality interface and large contact surface for the receipt of the agent. Preferably the agent is applied to this single surface only, in a controlled manner. The manner in which the surface is prepared and exposed ensures that the agent may easily and homogeneously enter the particle array-matrix structure so as to produce a high homogeneity, inverse opal, material. Such an inverse opal material demonstrates improved optical properties in comparison with those of previous techniques. The method makes the industrial production of inverse opal structures a practical reality.

The quality of the inverse opal structure is strongly dependent upon not only the manner in which the particles generate an array in step (a) but also the careful handling of the bonding between the particles. We note here that the presence of "interstices" in the array at step (a) should not be taken to mean that these interstices are not filled with a fluid at this stage. The bonding according to step (b) is preferably performed with the use of a binder. The fundamental function of the binder is to maintain the integrity of the array once formed and to provide a bridge for the later passage of the agent (such as etchant) between the particles. Typically the binder material is present during step (a) and, under the process conditions existent during step (a), has a function of causing insufficient bonding between the particles so as to allow the particles to self-assemble into the said array whilst permitting sufficient bonding during step (b).

Typically the binder is also arranged to bond the array to the first substrate in a releasable manner so as to allow step (g) to be performed.

The contact surface is critical for the eventual quality of the photonic crystal material produced. Preferably the contact surface of the array is a substantially flat surface. Furthermore the contact surface is typically provided by a layer of particles, preferably a close-packed layer. Thus, the said contact surface of the array advantageously comprises numerous paths through which the etching agent may enter the array either directly by contact with the particles or through the binder.

The contact surface generally comprises either substantially no binder material, or one or more regions of binder material having a thickness of less then 50 nanometres between the external surface of the said regions and the sphere material.

In most cases step (c) is performed prior to step (d) and therefore the matrix (such as provided by a resin) may be applied to the structure followed by lamination of the second substrate. However, step (d) may be performed prior to step (c), for example by pre-coating the second substrate with the matrix material before allowing this to enter the interstices. Thus, the matrix material may be attached to the substrate prior to step (c).

The fixing of the position of the matrix material with respect to the particles may be provided by a curing technique such as UV curing or the application of heat, these being two of a number of examples.

A preferred method of effecting the detachment according to step (f) is by using a peeling process in which the array and matrix are together separated from the substrate at a predetermined angle. Large separation angles approaching 180 degrees are particularly effective. A combination of one or more rollers and separator bars may be used to effect this step, for example by providing a separator bar with an edge formed to guide the detached substrate smoothly through a small radius of curvature. In this context, the use of low-friction materials such as poly(tetrafluoroethylene) may be particularly effective as separator bars.

Whilst a second substrate may be provided using a different material from the matrix, it is also possible that the second substrate of step (d) is formed from the matrix of step (c) such that the matrix forms a self-supporting substrate. Whether or not the matrix is provided as the second substrate, the peeling of either the first or second substrate from the particle-matrix array may be effected. Indeed each substrate may be peeled from the particle-matrix array if required and subject to the material being self-supporting.

Once the contact surface is exposed the etching agent in step (g) may be applied using one or more of:
i) dipping the array and matrix in a bath containing the etching agent;
ii) spraying the etching agent onto the contact surface;
iii) providing the etching agent as a vapour to the contact surface, so as to effect gas-phase etching.

The removal of etchant reaction products is helpful to ensure a full and rapid etching of the structure and therefore it is preferred that a controlled flow of etching agent is applied to the contact surface so as to remove by-products of the etching process. Such a flow of etching agent is preferably applied to substantially all of the contact surface simultaneously.

Various industrially applicable techniques may be used to implement practical examples of the method. For example one or more of steps (a) to (g) may be performed by winding the photonic crystal material being formed from a first roll to at least a second roll. A second or "output" roll may be provided for a particular step, this being used as the first or "input" roll for a following step. It is also envisaged that a number of steps and indeed all steps may be performed between the first and second rolls. Whilst the material may in principle be supported upon a smooth surface or guide along which it may slide smoothly, it is preferred that the photonic crystal material is suspended between said rolls during the said one or more steps. This improves the eventual quality of the photonic crystal material produced.

The use of a well controlled drying process provides an important contribution to the product, such a process being applicable as part of one or more of steps (a) to (e) or (g). In a particularly preferred example of the method at least one of the said substrates is formed from a thin film of polyethylene teraphthalate upon which is arranged an array of silica particles in a UV curable resin, said particles being removed using a hydrofluoric acid solution as the etching agent. This process is readily performed in an automated manner and provides a product with excellent optical properties. Preferably one or more further processing steps are implemented to incorporate the photonic crystal material into a security device for use in attachment or incorporation into articles such as security documents.

Typically such devices and documents will exhibit an optically variable effect in response to incident light due to the optical properties of the photonic crystal material.

### Brief Description of the Drawings

An example of a method according to the invention will now be described, with reference to the accompanying drawings, in which:
Figure 1 shows is a flow diagram providing an overview of the method of the examples;
Figure 2 shows the coating of the first substrate with a particle suspension according to a first example;
Figure 3 shows the application of a matrix material and second substrate according to the first example;
Figure 4 shows an alternative application of the matrix and second substrate according to a second example;
Figure 5 is a schematic sectional view through the sandwich structure formed according to the first or second examples;
Figure 6 shows the peeling of the first substrate from the structure; and,
Figure 7 shows the etching of the structure to form the inverse opal structure.

### Description of Examples

In the following discussion we set out a description of a method for producing a photonic crystal material which allows production of substantial quantities of material with excellent quality and upon an industrial scale.

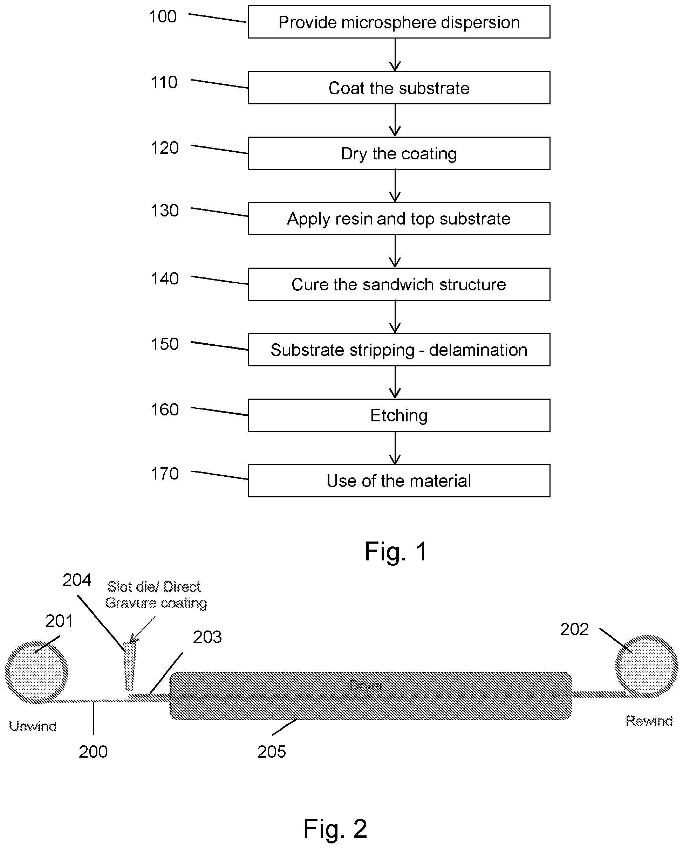

An overview of the process is shown in Figure 1 which sets out the main steps in the fabrication process. Each step is discussed in the sections set out below.

### Step 100: Providing a dispersion of microspheres in a suitable solvent

In accordance with an established approach in the art, silica microspheres, ranging from 150nm to 500nm in diameter, are prepared using a modified Stober method (see W. Stober, A. Fink, E. Bohn; J. Colloid. Interface Sci., Vol 26, Issue 1, 62-69 (1968)). Although silica spheres are selected in the present example, depending upon the application the spheres may be made of a variety of other materials, including metal oxides (titania, zirconia) as well as polymers (polystyrene, polymethacrylates, and so on). It is notable that these metal oxide spheres have significantly different chemistry to polymer spheres.

The spheres are provided in a suitable supporting solvent at between 5-95 wt % relative to the supporting solvent, preferably at between 40-60 wt %. The spheres are preferably provided with an unmodified surface for use in hydrophilic media. However, for use in a more hydrophobic medium the spheres may be surface modified at known in the art, for instance by reactive silanes (such as octadecyl(triethoxy)silane, ...), alcohols (such as octanol at high temperature, ...), or by other known methods.

The supporting solvent may be relatively hydrophilic, and may include water, alcohols (such as methanol, ethanol, propanol, butanol, ...), glycols (i.e. ethylene glycol, propylene glycol, glycol ethers, polymeric glycols, ...), polar aprotic solvents (i.e. DMSO, DMF, ...), or others. If the spheres are provided with a relatively hydrophobic surface, supporting solvents may include any number of organic solvents commonly used in solvent coating (i.e. esters, ethers, ketones, ...).

A suitable binder may be added to the dispersion to affect the mechanical properties of the microsphere coating to be formed. Specifically, the binder may be used to stabilise the coating of microspheres once the liquid carrier has been evaporated, by providing a thin coating on the microsphere surfaces, thereby "gluing" them together at their contact points.

If using a hydrophilic supporting solvent, water-soluble polymers may be used as binders. These may include: polyacrylamides, polyethers, polyalcohols, polycarboxylic acids, polyamides, polysulfonic acids, polyamines, polyvinylpyrrolidones, ... In the case of using a hydrophobic supporting solvent, a wide-variety of organic polymers may be used, preferably selected from extensively available commercial resins.

The molecular weight of the binder is very important. Too high a molecular weight may cause the spheres to flocculate before they can self-assemble, or may substantially increase the viscosity thereby reducing sphere mobility and inhibiting self-assembly. Conversely, too low a molecular weight may not bind the spheres strongly enough to mechanically stabilize them. Molecular weight is preferably kept to below 100,000, more preferably kept below 50,000, and even more preferably kept between 2,000 and 20,000. Other examples of binders include other soluble species such as molecular or oligomer materials, or nanoparticles (small silica particles such as Ludox® by Dupont). The volume loading of binder may range from 0.2% to 40% with respect to the microsphere volume.

The binder is a very important constituent in the process and accordingly it must be chosen carefully. Functionally it must interact with the spheres enough to mechanically stabilise them with respect to one another. However, if it interacts too much it will cause the sphere dispersion to flocculate/aggregate either following its addition or during the drying process. Since the present process is aimed at enabling industrial scale production the binder must meet other functional needs. For example it must mechanically stabilise the photonic film (once formed) for it to pass through roll-coating equipment, such as front side rollers, for bending and flexing, for substrate stretching/tension, and being rolled up on a core. Another function of the binder is to ensure a satisfactory adhesion of the photonic film coating on the support material (to be described below), without flaking or abrasion of the coating, and without adhesion being so strong as to prevent subsequent delamination from the base substrate.

During the drying process, as the solvent is removed the binder aggregates upon surfaces and at interfaces between such surfaces (for example at the sphere-substrate interface and at sphere-sphere interfaces together with at the sphere and substrate surfaces). Other binders may be arranged to adsorb upon such surfaces or to be attracted to chemical groups located upon such surfaces (sphere or substrate). The presence of the binder on the substrate influences the ability of the substrate to be removed later. The binder is usually present during the self-assembly of the spheres. In principle it could be added after such self-assembly although its addition at the beginning is advantageous since it ensures good distribution of the binder and reduces the overall number of process steps.

The binder content must be carefully controlled since the level of addition will crucially determine the filling-fraction of the matrix in the subsequent step, and therefore will impact its mechanical and optical properties. The binder must be at a sufficient concentration, and have suitable chemical properties, to allow for the efficient diffusion of etching agent through the structure (to be described further below). Unsuitable binders may block or hinder diffusion of the etchant, reducing possible line speed as well as generating potential etching defects (i.e. unetched portions of the structure, ...). Unsuitable binders may also be those that react with the etchant (i.e. through hydrolysis or degradation) and form by-products that may affect the performance of the product. However, in certain cases the use of a degradable binder may be used advantageously: For example, siloxane-based polymers are typically hydrophobic and block the diffusion of aqueous solutions, but if exposed to hydrofluoric acid their backbone will be readily degraded thereby providing a contiguous path for this etchant.

Other coating additives as known in the art may be employed, including surfactants, wetting agents, defoamers, humectancts, biostats, ...

A typical composition for the sphere-based coating formulation is as follows:
- Water: 40-70% wt
- Water-dispersible pH modifier (base): 0.2-5% wt
- Silica microspheres: 30-60% wt
- Water-soluble polymer binder: 0.5-10% wt
- Non-ionic surfactant: 0.1-1% wt
- Bacteriocide: 0.001-0.01% wt

These components may be formulated and compounded using methods known in the art. Particular dispersion methods (high/low-shear mixing, ultrasonic dispersion, media milling/dispersion, ...) may be used to mix and compound the components to ensure a smooth and aggregate-free coating formulation.

### Step 110: Coating of the sphere dispersion onto a support

Once the dispersion of spheres has been obtained in solution, with the selected constituents, the solution is then carefully deposited upon a substrate in the form of a support material. The coating may be performed by a number of precision coating methods in order to form a continuous thin film or a spatially distributed film of predetermined lengths depending upon the later steps to be employed. Many coating methods may be used and these include Gravure coating, forward or reverse, direct or indirect, Meyer rod, Slot die, Roll coaters (forward, reverse, multiroll), Multi-layer cascade(slide), Knife-over-roll, Curtain, Dip, Blade, Spray, Dahlgren, Screen printing, Extrusion, Comma Coating, Air Knife, Transfer, MICROGRAVURE®. A number of different types of substrates may be employed. The substrates may be flexible or rigid (inflexible). Flexible substrates may include a plastic substrate (i.e. polyester, polypropylene, acrylic, polyethylene, polyurethane, ...), metal foil, paper or other non-woven material. Rigid substrates may include glasses, paper board, metals, ceramics. The use of a flexible substrate allows more convenient handling of the material formed.

Referring now to Figure 2, in the present example a flexible substrate 200 is provided. The substrate material 200 is a PET film of thickness 0.5 mil (where 1 mil = 25.4 micrometres) and is provided on a roll 201 mounted on a freely rotatable or driven spindle. A second spindle is provided, spaced apart from the first, for the winding of the substrate and deposited material onto a roll 202. In operation the spindles are operated so as to unwind the substrate from the roll 201 and to rewind it onto roll 202 with the sphere dispersion coating 203 being coated on the substrate at a point between the rolls. At a position downstream of the roll 201 a slot die 204 is located adjacent an upper surface of the substrate 200. This could be replaced with a direct gravure coating apparatus. The sphere dispersion described in association with step 100 of Figure 1 is provided to the upper surface of the substrate. In the present example relative movement between the substrate and the slot die is effected using a stationary die and a moving substrate.

In the present example an aqueous coating 203 having a 50% content of solids (by weight) is delivered through the slot die to the substrate surface. A wet laydown density of about 20 gsm (grammes per square metre) is used (converting to about 10 gsm in a dried material).

Downstream of the slot die 204 and also positioned between the rollers is an elongate drier 205. The function of the drier is to remove the solvent in a controlled manner. The drying rate needs to be controlled so as to ensure the correct optical properties of the coating are obtained. Slow drying in a relatively low temperature environment using a long drier with minimal air turbulence is preferred. The coating is dried fully onto the substrate before rewinding onto the roll 202.

The above described step provides for the general coating of the substrate. It is however also contemplated that, rather than coating the substrate evenly, the coating could be applied locally so as to produce resultant regions which might for example be arranged as indicia or images. Such regions might be applied using a moveable delivery head or other form of printing mechanism in place of the die 204.

The drying process is now described.

### Step 120: Drying of sphere dispersion

In order to obtain a dry film of self-assembled microspheres, the carrier liquid must be driven off by a method such as heat, gas flow, infra-red radiation, ... The drying must be controlled, and slow enough to allow the spheres to orient themselves with respect to one another to give a self-assembled structure. "Slow" vs "rapid" drying are relative terms, and will depend on the particular solvent, additives, ...

For example, in the case of a mostly water-based dispersion, with the slot die coating system of Figure 2 operating at ∼20 feet per minute (about 0.1 ms⁻¹), an optimum self-assembly was observed using a system with minimum impingement of room-temperature air (flow at 750 cfm (0.35 m³s⁻¹)) distributed over a length of 30-35 feet (9.1-10.7m). Additives may be added to the sphere dispersion in order to control the fluid or drying properties, which may result in a controlled degree of self-assembly. For example, certain surfactants or surface-active molecules may result in a lower dispersion viscosity, or a lower degree of surface interactions between neighbouring spheres, which may result in more efficient self-assembly. Also, co-solvents may be used to control the drying behaviour. For instance, high boiling solvents (such as ethylene glycol) may be added to the sphere dispersion. In this way, as the coating dries it may retain a greater amount of fluidity than provided by a pure water solvent, and therefore sphere mobility, allowing for more efficient self-assembly. In an opposite way, lower-boiling additives may also be added (such as methanol). These lower-boiling additives may evaporate relatively rapidly, the fluid pressure of which may serve to orient or pre-orient the spheres into positions which may facilitate formation of the final self-assembled structure.

The coating conditions may also be used to modify the self-assembly behaviour. For instance, drying at an increased temperature may result in poorer self-assembly due to kinetic trapping. However, instead of a hot-air dryer, one may employ a steam rehumidification unit (as used in the paper industry) to dry the sphere dispersion. In this case, the coating will be at a higher temperature, giving the spheres an increased mobility which may lead to a more efficient self-assembly. At the same time, the high concentration of water vapour would promote a longer drying process than if in dry conditions, which may prevent premature drying of the coating.

Following the drying step, the coated substrate may be wound into a roll for later processing as shown in Figure 2, or may continue directly into the next process step.

Such processing may in principle include the repeating of steps 110 and 120 so as to apply multiple coatings (which may also include microsphere compositions of the same or different composition or size). Such multiple passes may be used to produce indicia or images of different types.

### Step 130: Apply a curable resin and top substrate

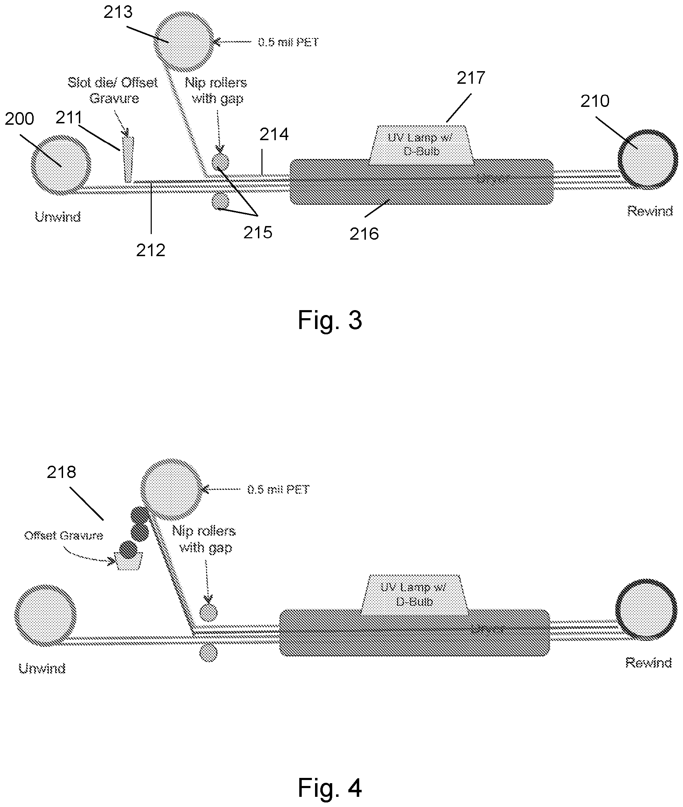

Having obtained an ordered array of spheres as a coating 203 upon the substrate 200, in this following step a top substrate is applied to the coating 203 by wet lamination of a curable resin. A curable resin (such as a UV curable resin, electron-beam (EB) curable resin, thermal curable resin, ...) is coated onto the coating 203 of dried spheres using a coating method such as Gravure coating, forward or reverse, direct or indirect, Meyer rod, Slot die, Roll coaters (forward, reverse, multiroll), Multi-layer cascade(slide), Knife-over-roll, Curtain, Dip, Blade, Spray, Dahlgren, Screen printing, Extrusion, Comma Coating, Air Knife, Transfer, MICROGRAVURE®. Referring to Figure 3 an analogous apparatus to that shown in Figure 2 is provided, with two separated rolls and a slot die. Specifically the roll 202 of substrate and coated spheres 203 is placed on a spindle and wound onto a roll 210 positioned downstream from the roll 202. A second slot die 211 (or offset gravure printing apparatus) positioned adjacent an upper exposed surface of the coating 203 just downstream from the roll 201 provides a further coating of UV curable resin 212 to the surface of coating 203.

The curable resin may be provided as a substantially solvent-free coating (100% solids), or may be provided as a coating thinned with solvent, in which case the solvent would be required to be removed using a drying oven prior to lamination.

Following coating of the resin (or coating followed by drying for a solvent-thinned system), a separate substrate is laminated onto the resin-coated microsphere film, forming a sandwich structure. This is achieved by providing further roll 213 of second substrate 214 material and laminating this material to the UV curable resin using nip rollers 215 (with an appropriate gap) positioned upon either side of the sandwich structure. Thus the second substrate, which is in this case a PET film of thickness 0.5 mil (-0.013mm) is pressed onto the UV curable resin as it passes through the nip of the rollers (the gap between them being about 2 mil (∼0.05 mm). Note that loaded, gap-less nip rollers may place too much pressure on the uncured resin causing it to be ejected from the sides of the web, unless the load pressure is carefully controlled. In alternative methods, since a silica sphere coating may be prone to abrasion from contact coating methods such as Meyer bars the gentler use of a rubber roll in an offset gravure process, or a contactless method such as slot-die, may be a preferred alternative.

The substrate may consist of any of the substrates listed previously, preferably being a flexible substrate as in the present example. Ideally enough resin is applied to completely fill the space between the microspheres, with some excess resin overlayer. It is feasible to use excess, deficient, or stoichiometric quantities of resin. The typical structure resulting from this lamination consists of the original coating support substrate 200, followed by the resin-impregnated sphere coating 203, followed by a layer of excess resin, followed by the second substrate 214.

An even and sufficient pressure is used during lamination to ensure the minimisation of bubbles and other defects. Standard lamination parameters include nip gap, nip pressure, tension of substrates, temperature, roller diameter, material covering for either roller, amongst others.

Rather than applying the resin 212 to the coating 203, followed by the substrate 214, alternatively, the curable resin may be coated onto a secondary substrate first, and this substrate subsequently laminated onto the microsphere coating (if the resin is diluted with solvent, the solvent is dried off prior to lamination). In this way, the resultant structure is the same, however by coating onto a bare substrate there may be some advantages in the coating process (coat weight control, uniformity, ...) than by coating onto a porous sphere layer.

A variety of additives may be added to the resin, to change properties such as viscosity, rheology, and so on, as is known in the art.

In some cases, a relatively large excess of resin may be applied, such that following the curing step the excess resin on top of the sphere-resin composite may be thick/robust enough to serve as a self-supporting substrate in subsequent steps, thereby obviating the need for the separate additional substrate material 214.

### Step 140: Cure of the sandwich structure

Curing is used to make the second substrate effective in fulfilling its intended roll in supporting the coating 203 and to lock the relative positions of the spheres. Curing may be achieved using any number of common curing methods, depending on the curing method (initiators, co-initiators, reactive groups, accelerators, kinetic modifiers, ...) used in the resin. Curing may be by using UV light (i.e. using a radical or cationic photoinitiator), IR radiation/heat (i.e. using a thermal free radical initiator), electron beam (which may be used initiator-free), gamma-rays (which may be used initiator-free), drying (i.e. evaporation of curing inhibitor such as amines) or other known curing methods.

In the case where the second (additional) substrate is not used (and the resin becomes the second substrate once cured), it may be preferable to use inerting (such as nitrogen inerting) methods to result in desirable properties of the top resin coat such as low tackiness.

Figure 3 illustrates the UV curing apparatus according to the present example. A curing unit 216 is positioned downstream of the nip rollers 215. The UV curing unit may incorporate UV lamps, UV-LED arrays, or excimer flash lamps, for instance. In one embodiment, the UV lamps may comprise highpressure mercury bulbs with atomic iron dopant (commonly known as a "D" bulb). The curing unit may also comprise means to eliminate waste heat produced by the UV lamps, such as chill rollers and air-impingement cooling. Within the drier 216 a UV lamp 217 is located to expose the resin 212 to UV light thereby promoting the curing process. Note that, if used, the second substrate is sufficiently UV transparent to allow the curing to be performed.

In an example where the UV curable resin is firstly coated upon the PET substrate (a similar substrate thickness may be used as described earlier) the resin is applied to the substrate using an offset gravure apparatus as shown at 218 in Figure 4, this being adjacent the roll 213. As a result the second slot die 211 is not required. In the particular example described here the UV-curable resins we used are 100% solids (no solvent) and of relatively low viscosity (less than 100 cP (0.1 Pas)). It has been found in practice that the region where the UV exposure takes place should be cooled with a fan, compressed air or a nitrogen purge since if a high temperature is generated in the region then too much adhesion occurs making the delamination step (described below) difficult to perform.

Following curing, the laminate material may be wound into the roll 210 for later processing, or may continue directly into the next process step.

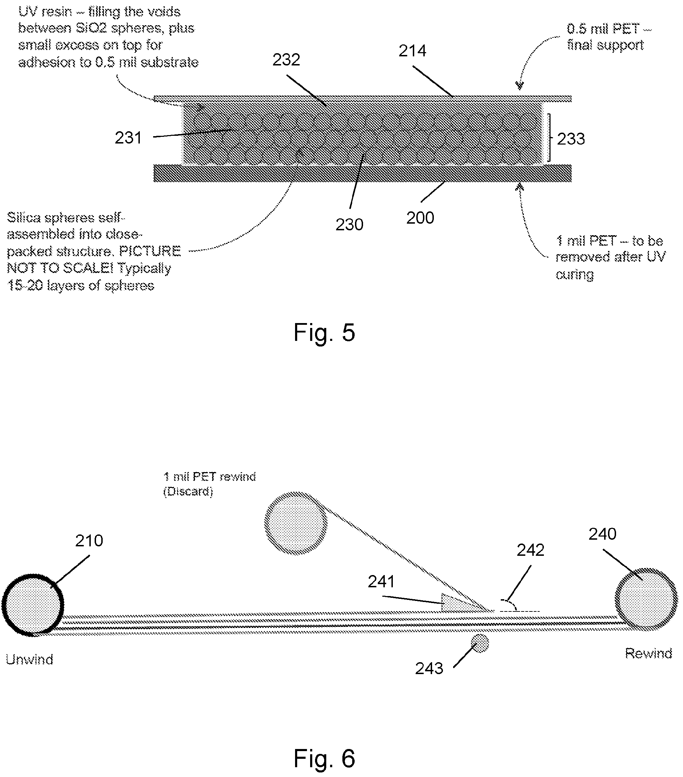

Figure 5 is a schematic section through the sandwich structure showing the upper 214 and lower 200 PET substrates. An ordered array of silica spheres 230 can be seen to be in intimate contact with the lower PET substrate 200. As was explained earlier, the silica spheres are self-assembled into the array structure. It will be understood that Figure 5 is not to scale and in practice between 10 and 50 layers of spheres, more preferably between 15 and 30 layers of spheres are present. Figure 5 illustrates an important function of the UV curable resin in that it fully penetrates into the array structure, filling the voids between the silica spheres left by the earlier driving off of the solvent. The resin therefore provides the matrix of a silica-sphere:resin composite. This composite is labelled at 233. It will also be understood that the refractive index of the resin (and of course whichever gas fills the voids left by the removal of the spheres) greatly influences the optical properties of the resultant photonic crystal structure.

Figure 5 therefore shows a matrix region 231 of resin where the resin penetrates the sphere array. In addition, above the general surface of the sphere array Figure 5 illustrates an excess resin region 232 providing a gap between the top of the array and the second substrate 214 above.

In the next stage in the process, the substrate 200 is removed from the "bottom" of the array to expose a contact surface of the photonic crystal structure.

In principle either the UV curable resin and/or the UV exposure could be applied in a patterned manner so as to ultimately provide the resultant photonic crystal material in the shape of indicia or as an image.

### Step 150: Substrate stripping - Delamination

Following the curing step the ordered layer of spheres in the coating 203 is sandwiched between two substrates. This sandwich structure is then peeled apart.

In the example to be described in association with Figure 6, the first substrate 200 is mechanically peeled off and discarded, while both the sphere-resin composite 233 and excess resin 232 overlayer may remain on the second substrate. In an alternative approach the second substrate 214 may be peeled off and carry with it the excess cured resin layer. In the former case (Figure 6), the removal of the first substrate 200 exposes the bottom of the sphere array, while in the latter, the removal of the substrate 214 and resin overlayer 232 exposes the top of the sphere array. Exposing the large top or bottom interface of the array allows the entire sphere array to be etched rapidly and homogenously using an etchant. Even a very thin film (i.e. less than 50 nm) of cured resin remaining on the surface to be etched may adversely impact the etching time required, in addition to impacting the visual effect of the final coating.

In Figure 6, again there is a similar basic arrangement provided of winding a web between an "unwinding" and "rewinding" roll. The roll 210 from Figure 3 is provided on a spindle. A second spindle holds a roll 240 and the sandwich structure is wound from the roll 210 to the roll 240. At a position between the rolls a PTFE stripping bar 241 is located. This traverses the direction of travel of the sandwich structure. A downstream edge of the bar which faces roll 240 and which lies in a parallel plane to the upper surface of the sandwich structure is used to remove the first substrate 200. It should be noted therefore that the orientation of the roll 210 is reversed in the vertical direction in comparison with Figure 3.

As the sandwich structure passes the stripping bar 241 the substrate surface 200 gently slides across a downward facing surface of the bar (this being aided by the use of the PTFE material). At the downstream edge of this surface is positioned the edge discussed above. Here the substrate 200 undergoes a rapid change of direction at a high take off "peeling" angle in order to effect clean peeling from the composite structure 233 and in particular the flat surface (originally lower surface) of the array of spheres and matrix. It has been shown that a high peeling angle of close to 180 degrees provides excellent results. The peeling angle is shown in Figure 6 at 242. In order to stabilise the material at the point of peeling, a support roller 243 is provided beneath the stripping bar to ensure that the sandwich structure is urged against the bar. The removed substrate is wound onto a further roll 243 which is discarded. The remainder of the sandwich structure continues to the roll 240 where is it wound for further use. Notably, as before, the structure may continue to the next stage of processing without winding.

In the alternative situation where the second substrate is peeled, this is possible since the composite of matrix and spheres is a strong structure which has a natural relatively weak interface at the surface of the sphere array.

A number of parameters affect the success of the delamination step.

The surfaces of both the first and second substrates will strongly influence their adhesion to the resin or sphere-resin composite. The first substrate 200 should have at least satisfactory adhesion to the sphere coating (see Figure 2), as well as to the cured sphere-resin composite 233 formed later, to allow for roll-to-roll processing. Substrates may be treated by any number of surface treatments known in the art such as corona discharge, plasma, flame, or chemical modification. In addition, the nature of the substrate may be selected from a wealth of commercially-available substrates with or without surface modifications such as gel-coats, tie-coats, release coatings, adhesion promoters, etc... It may be preferable for the second substrate to have greater surface interaction with the resin to facilitate transfer thereon.

For every composition of resin, interactions with the surface of both the first and second substrate will be different. Consideration of relative surface energies is important for obtaining a defect-free delamination. A great number of additives can be added to the resin formulation to modify the surface behaviour and interactions with either of the two substrates.

It will be recalled that the Figure 6 example described above causes the removal of the first substrate. In an alternative approach it is the second substrate which is removed. When either of the substrates is peeled off, it can be done at a variety of angles, ranging from close to 0 degrees up to 180 degrees, assuming the other substrate is held flat and depending upon the application. Conversely, both substrates may be peeled at an angle, with neither in plane with the original laminate. A system of rollers with separator bars may be used to more effectively carry out the delamination. In general, the greater the curvature at which this substrate is peeled (relative to its original orientation), the higher the propensity for it to detach from the layer immediately under it.

### Step 160: Etching

The underlying aim of the method is to provide an improved and industrially applicable means for generating inverse opal photonic crystal structures. A crucial aspect of this is in providing multiple paths into the structure to allow the removal agent (such as etchant) to remove the sphere material. The use of the peeling step in combination with the substrates provides a surface which is smooth and which may be attacked readily by the agent.

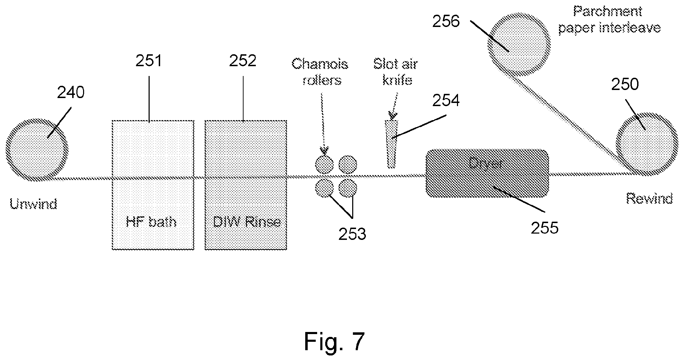

Referring to Figure 7, the apparatus used for etching of the material of the present example is now described. As before the basic arrangement is to span the web of material between an unwinding roll and a rewinding roll. The unwinding roll of Figure 7 is shown at 240 (as referred to in Figure 6) and the eventual rewinding roll is shown at 250. Downstream of the roll 240 is provided an etchant bath 251 containing aqueous hydrofluoric acid. The cured microsphere-polymer composite film is dipped in the aqueous solution of hydrofluoric acid (HF). In practice the un-coated back-side of the PET is exposed to the etchant with no measurable effect on the PET. The concentration of the etchant may range from 0.1% to 70%, being most preferably in the range of 2% to 20%. Etching times may range from 0.1 seconds to 5 minutes, depending on the HF concentration and characteristics of the material. Typically a 6 to 12% HF (aq) solution with a dwell time in the etchant of 15 to 5 seconds (respectively) is used in this example. Downstream of the etchant bath 251 a wash bath 252 is located for receiving and washing the etched structure. Alternatively or in addition, washing may be carried out using a spray of wash fluid. Washing may also be carried out in multiple stages, for instance with an initial pre-wash bath to remove the majority of the etchant and by-products, followed by a second wash with a bath/spray of pure water. Typically the wash station contains de-ionised water for removing the etchant. Systems for continuous etching with aqueous acids (such as HF) using moving bath immersion are available, for instance, from suppliers such as Infinity Precision Systems LLC of Minneapolis, USA.

Further downstream from the wash bath 252 the structure may be passed through pairs of drying rollers 253 (chamois or equivalent surface material, may also alternately comprise elastomeric squeegees) for drying each side of the structure and then on past a slot air knife 254 which provides intensive drying of at least the etched surface of the material. Alternately, the use of one of more slot air knives may be sufficient to eliminate excess wash liquid without the need for drying rollers or squeegees. Further downstream the material enters a final dryer 255 which is used to remove all of the excess liquid from the structure and minimises the liquid remaining within the interlinked spherical-shaped voids within the structure. A typical temperature used for the final drying step is 90 to 120 Celsius. On emerging from the dryer, the substrate, bearing its etched material, is wound on to the roll 250. Due to the delicate nature of the structure the material may be co-wound with a parchment paper interleave layer which is supplied from a further roll 256. This may also act as a release layer for later use of the material.

In some alternative implementations, etching of silica spheres may be effected by vapour-phase etching, whereby gaseous HF reacts with the silica (SiO₂) to produce SiF₄ and H₂O vapours. In some cases, the binder used in the sphere coating may dissolve in the etchant. In other cases, the binder may mostly dissolve, but leave behind a layer adhered to the porous polymer. In other cases, the binder may either swell but not dissolve, or remain mainly unaffected by the etchant. Where the binder is unaffected, flow paths must exist within or adjacent the binder to allow the etchant to penetrate the spheres.

There are a number of primary parameters affecting the etching process.

The sphere type will dictate the etching conditions. In addition to silica, spheres may be formed from other metal oxides with different etching chemistry (TiO₂ - strong base; Fe₂O₃ - HCI; etc...), or polymers (i.e. PMMA, PS, ...) which may be etched by various organic solvents.

The sphere size may affect the etching times required, for instance larger sphere sizes may etch relatively slower than smaller spheres due to a lower surface-volume ratio. In addition, sphere size may affect the relative size of the contact points between spheres, which in turn would influence the size of the hole dividing two neighbouring spherical cavities in the resulting porous polymer. This may then influence the permeation of the etchant throughout the structure, whereby larger through-holes may result in relatively higher diffusion rates of etchant and thereby to larger etch rates of the sphere array.

The type of binder and its thickness may impact the permeation of the etchant throughout the structure, thereby influencing etch rate and homogeneity.

The etchant concentration, temperature, mass flow, by-product removal/buildup, additives (i.e. chelating additives) may all influence the rate, extent, and homogeneity of etching.

As for some of the other steps, indicia or images could be produced in the final photonic crystal material by the selective application of the etchant, for example using a printing technique.

### Step 170: Use of the material

Following the production of a roll of the inverse opal material (whether or not adhered to a substrate), this may then be used in various practical applications. Typically the structure may undergo some further processing steps including splicing into particular geometries, the application of one or more protective or optical coatings, and the incorporation into an article. Example articles include security devices for use in security documents such as banknotes, cheques, passports, identity cards, certificates of authenticity, fiscal stamps and other documents for securing value or personal identity.

The present method allows the generation of substantial quantities of inverse opal photonic crystal material having high quality optical properties. For example, in comparison with the known techniques described earlier, the present method provides significant advantages by introducing a second substrate prior to polymerization, thus allowing the "automatic" exposure of a high quality surface to be etched. This obviates the step of excess polymer removal that is required in known processes and which is very difficult to perform industrially. Furthermore, in the present method, the second substrate supports the resulting photonic crystal film during etching, in contrast with the prior technique of releasing a fragile membrane to float freely. As will be understood, the use of such a second substrate may be readily implemented in an industrial context, whereas the use of a free floating structure would present substantial technical challenges.

## Claims

1. A method of forming a photonic crystal material having an inverse opal structure, comprising:
a) generating an array of particles on a first substrate, the array including interstices between the particles for the receipt of a matrix material;
b) bonding the particles to each other so as to fix the relative positions of the particles with respect to each other;
c) providing a matrix material to at least partially fill the interstices;
d) attaching a second substrate to the array, or forming a second substrate on the array, such that the array is positioned between the first and second substrates;
e) fixing the position of the matrix material with respect to the particles;
f) detaching at least one of the first or second substrates from the array so as to expose a respective contact surface of the array; and,
g) applying an etching agent to the contact surface, said etching agent being adapted to remove material of the particles so as form the inverse opal structure.

2. A method according to claim 1, wherein step (b) is performed with the use of a binder.

3. A method according to claim 2, wherein the said binder material is present during step (a) and, under the process conditions existent during step (a), has a function of causing insufficient bonding between the particles so as to allow the particles to self-assemble into the said array.

4. A method according to claim 2 or claim 3, wherein the binder is arranged to bond the array to the first substrate in a releasable manner so as to allow step (g) to be performed.

5. A method according to any of the preceding claims, wherein the said contact surface of the array is a substantially flat surface.

6. A method according to any of the preceding claims, wherein the said contact surface of the array comprises numerous paths through which the etching agent may enter the array either directly by contact with the particles or through the binder.

7. A method according to claim 6, wherein the contact surface comprises either substantially no binder material or one or more regions of binder material having a thickness of less then 50 nanometres.

8. A method according to any of the preceding claims, wherein step (d) is performed prior to step (c).

9. A method according to claim 8, wherein the matrix material is attached to the substrate prior to step (c).

10. A method according to any of the preceding claims, wherein step (f) is performed by a peeling process in which the array and matrix are together separated from the substrate at a predetermined angle.

11. A method according to claim 10, wherein the peeling is performed using a combination of one or more rollers and separator bars.

12. A method according to any of the preceding claims, wherein the second substrate of step (d) is formed from the matrix of step (c) such that the matrix forms a self-supporting substrate.

13. A method according to any of the preceding claims, wherein in step (g) the etching agent is applied by one or more of:
i) dipping the array and matrix in a bath containing the etching agent;
ii) spraying the etching agent onto the contact surface;
iii) providing the etching agent as a vapour to the contact surface, so as to effect gas-phase etching.

14. A method according to claim 13, wherein a flow of the etching agent is applied to the contact surface so as to remove by-products of the etching process.

15. A method according to claim 14, wherein a flow of the etching agent is applied to substantially to all of the contact surface simultaneously.

16. A method according to any of the preceding claims, further comprising performing one or more of steps (a) to (g) by winding the photonic crystal material being formed from a first roll to at least a second roll.

17. A method according to claim 16, wherein the photonic crystal material is suspended between said rolls during the said one or more steps.

18. A method according to claim 16 or claim 17, further comprising applying a drying process as part of one or more of steps (a) to (e) or (g).

19. A method according to any of the preceding claims wherein at least one of the said substrates is formed from a thin film of polyethylene teraphthalate upon which is arranged an array of silica particles in a UV curable resin, said particles being removed using a hydrofluoric acid solution as the etching agent.

20. A method according to any of the preceding claims, further comprising incorporating the photonic crystal material into a security device.

## Patentansprüche

1. Verfahren zum Bilden eines photonischen Kristallmaterials, das eine inverse Opalstruktur aufweist, wobei das Verfahren Folgendes umfasst:
a) Erzeugen einer Anordnung von Teilchen auf einem ersten Substrat, wobei die Anordnung Zwischenräume zwischen den Teilchen zur Aufnahme eines Matrixmaterials einschließt,
b) Binden der Teilchen aneinander, um so die relativen Positionen der Teilchen in Bezug aufeinander zu fixieren,
c) Bereitstellen eines Matrixmaterials, um die Zwischenräume wenigstens teilweise zu füllen,
d) Befestigen eines zweiten Substrats an der Anordnung oder Bilden eines zweiten Substrats auf der Anordnung, so dass die Anordnung zwischen dem ersten und dem zweiten Substrat angeordnet ist,
e) Fixieren der Position des Matrixmaterials in Bezug auf die Teilchen,
f) Lösen wenigstens eines von dem ersten oder dem zweiten Substrat von der Anordnung, um so eine jeweilige Kontaktfläche der Anordnung freizulegen, und
g) Aufbringen eines Ätzmittels auf die Kontaktfläche, wobei das Ätzmittel dafür geeignet ist, Material der Teilchen freizulegen, um die inverse Opalstruktur zu bilden.

2. Verfahren nach Anspruch 1, wobei Schritt (b) mit der Verwendung eines Bindemittels durchgeführt wird.

3. Verfahren nach Anspruch 2, wobei das Bindemittelmaterial während Schritt (a) vorhanden ist und, unter den während Schritt (a) vorhandenen Prozessbedingungen, eine Funktion hat, eine unzureichende Bindung zwischen den Teilchen zu verursachen, um so zu ermöglichen, dass sich die Teilchen selbst in die Anordnung zusammensetzen.

4. Verfahren nach Anspruch 2 oder Anspruch 3, wobei das Bindemittel dafür angeordnet ist, die Anordnung auf eine lösbare Weise an das erste Substrat zu binden, um so zu ermöglichen, dass Schritt (g) durchgeführt wird.

5. Verfahren nach einem der vorhergehenden Ansprüche, wobei die Kontaktfläche der Anordnung eine im Wesentlichen ebene Fläche ist.

6. Verfahren nach einem der vorhergehenden Ansprüche, wobei die Kontaktfläche der Anordnung zahlreiche Bahnen umfasst, durch die das Ätzmittel entweder unmittelbar durch Kontakt mit den Teilchen oder durch das Bindemittel in die Anordnung eindringen kann.

7. Verfahren nach Anspruch 6, wobei die Kontaktfläche entweder im Wesentlichen kein Bindemittelmaterial oder einen oder mehrere Bereiche von Bindemittelmaterial, die eine Dicke von weniger als 50 Nanometer aufweisen, umfasst.

8. Verfahren nach einem der vorhergehenden Ansprüche, wobei Schritt (d) vor Schritt (c) durchgeführt wird.

9. Verfahren nach Anspruch 8, wobei das Matrixmaterial vor Schritt (c) am Substrat befestigt wird.

10. Verfahren nach einem der vorhergehenden Ansprüche, wobei Schritt (f) durch einen Abziehprozess durchgeführt wird, bei dem die Anordnung und die Matrix zusammen in einem vorbestimmten Winkel von dem Substrat gelöst werden.

11. Verfahren nach Anspruch 10, wobei das Abziehen unter Verwendung einer Kombination von einer oder mehreren Walzen und Trennstäben durchgeführt wird.

12. Verfahren nach einem der vorhergehenden Ansprüche, wobei das zweite Substrat von Schritt (d) aus der Matrix von Schritt (c) gebildet wird, so dass die Matrix ein selbsttragendes Substrat bildet.

13. Verfahren nach einem der vorhergehenden Ansprüche, wobei in Schritt (g) das Ätzmittel aufgebracht wird durch eines oder mehreres von Folgendem:
i) Tauchen der Anordnung und der Matrix in ein Bad, welches das Ätzmittel enthält,
ii) Sprühen des Ätzmittels auf die Kontaktfläche,
iii) Bereitstellen des Ätzmittels als ein Dampf auf die Kontaktfläche, um so Gasphasenätzung zu bewirken.

14. Verfahren nach Anspruch 13, wobei ein Strom des Ätzmittels auf die Kontaktfläche aufgebracht wird, um so Nebenprodukte des Ätzprozesses zu entfernen.

15. Verfahren nach Anspruch 14, wobei ein Strom des Ätzmittels gleichzeitig auf im Wesentlichen die gesamte Kontaktfläche aufgebracht wird.

16. Verfahren nach einem der vorhergehenden Ansprüche, das ferner das Durchführen eines oder mehrerer der Schritte (a) bis (g) durch Wickeln des photonischen Kristallmaterials, das gebildet wird, von einer ersten Walze zu wenigstens einer zweiten Walze umfasst.

17. Verfahren nach Anspruch 16, wobei das photonische Kristallmaterial während des einen oder der mehreren Schritte zwischen den Walzen aufgehängt wird.

18. Verfahren nach Anspruch 16 oder Anspruch 17, das ferner das Anwenden eines Trocknungsprozesses als Teil eines oder mehrerer der Schritte (a) bis (e) oder (g) umfasst.

19. Verfahren nach einem der vorhergehenden Ansprüche, wobei wenigstens eines der Substrate aus einem dünnen Film von Polyethylenterephthalat gebildet wird, auf dem eine Anordnung von Siliziumdioxidteilchen in einem UV-härtbaren Harz angeordnet ist, wobei die Teilchen unter Verwendung einer Fluorwasserstoffsäurelösung als das Ätzmittel entfernt werden.

20. Verfahren nach einem der vorhergehenden Ansprüche, das ferner das Integrieren des photonischen Kristallmaterials in eine Sicherheitseinrichtung umfasst.

## Revendications

1. Procédé de formation d'un matériau à cristaux photoniques ayant une structure d'opale inverse, comprenant :
a) la production d'un réseau de particules sur un premier substrat, le réseau contenant des interstices entre les particules destinés à la réception d'un matériau de matrice ;
b) la liaison des particules les unes aux autres de manière à fixer les positions relatives des particules les unes par rapport aux autres ;
c) l'utilisation d'un matériau de matrice pour combler au moins en partie les interstices ;
d) la fixation d'un second substrat au réseau, ou la formation d'un second substrat sur le réseau, de sorte que le réseau soit positionné entre les premier et second substrats ;
e) la fixation de la position du matériau de matrice par rapport aux particules ;
f) le détachement d'au moins un des premier ou second substrats du réseau de manière à exposer une surface respective de contact du réseau ; et,
g) l'application d'un agent d'attaque chimique à la surface de contact, ledit agent d'attaque chimique étant conçu pour éliminer du matériau des particules de manière à former la structure d'opale inverse.

2. Procédé selon la revendication 1, dans lequel l'étape (b) se fait à l'aide d'un liant.

3. Procédé selon la revendication 2, dans lequel ledit matériau de liant est présent lors de l'étape (a) et dans les conditions de procédé concernant l'étape (a), a une fonction de production d'une liaison insuffisante entre les particules de manière à permettre aux particules de s'assembler automatiquement sous la forme dudit réseau.

4. Procédé selon la revendication 2 ou la revendication 3, dans lequel le liant est disposé pour lier le réseau au premier substrat d'une manière détachable de manière à permettre la réalisation de l'étape (g).

5. Procédé selon l'une quelconque des revendications précédentes, dans lequel ladite surface de contact du réseau est une surface sensiblement plane.

6. Procédé selon l'une quelconque des revendications précédentes, dans lequel ladite surface de contact du réseau comprend de nombreuses voies à travers lesquelles l'agent d'attaque chimique peut pénétrer dans le réseau soit directement par contact avec les particules, soit à travers le liant.

7. Procédé selon la revendication 6, dans lequel la surface de contact comprend soit sensiblement aucun matériau liant soit au moins une région de matériau de liant présentant une épaisseur inférieure à 50 nm.

8. Procédé selon l'une quelconque des revendications précédentes, dans lequel l'étape (d) a lieu avant l'étape (c).

9. Procédé selon la revendication 8, dans lequel le matériau de matrice est attaché au substrat avant l'étape (c).

10. Procédé selon l'une quelconque des revendications précédentes, dans lequel l'étape (f) a lieu selon un procédé de pelage dans lequel le réseau et la matrice sont conjointement séparés du substrat selon un angle prédéfini.

11. Procédé selon la revendication 10, dans lequel le pelage a lieu à l'aide d'une combinaison d'un ou de plusieurs des rouleaux et des barres séparatrices.

12. Procédé selon l'une quelconque des revendications précédentes, dans lequel le second substrat de l'étape (d) est produit à partir de la matrice de l'étape (c) de sorte que la matrice forme un substrat autoporteur.

13. Procédé selon l'une quelconque des revendications précédentes, dans lequel à l'étape (g), l'agent d'attaque chimique est appliqué par au moins une méthode parmi les suivantes :
i) trempage du réseau et de la matrice dans un bain contenant l'agent d'attaque chimique ;
ii) pulvérisation de l'agent d'attaque chimique sur la surface de contact ;
iii) utilisation de l'agent d'attaque sous forme de vapeur sur la surface de contact, de manière à effectuer une attaque chimique en phase gazeuse.

14. Procédé selon la revendication 13, dans lequel un flux de l'agent d'attaque chimique est appliqué à la surface de contact de manière à éliminer les sous-produits du processus d'attaque chimique.

15. Procédé selon la revendication 14, dans lequel un flux de l'agent d'attaque chimique est appliqué sensiblement à l'ensemble de la surface de contact simultanément.

16. Procédé selon l'une quelconque des revendications précédentes, comprenant en outre la réalisation d'au moins une étape (a) à (g) par enroulement du matériau cristallin photonique qui est formé d'un premier rouleau sur au moins un second rouleau.

17. Procédé selon la revendication 16, dans lequel le matériau cristallin photonique est mis en suspension entre lesdits rouleaux pendant ladite au moins une étape.

18. Procédé selon la revendication 16 ou la revendication 17, comprenant en outre l'application d'un processus de séchage en tant que partie d'au moins une étape (a) à (e) ou (g).

19. Procédé selon l'une quelconque des revendications précédentes, dans lequel au moins une desdites substances est formée d'un film fin de poly(téréphtalate d'éthylène) sur lequel est disposé un réseau de particules de silice dans une résine durcissable aux UV, lesdites particules étant éliminées grâce à une solution d'acide fluorhydrique en tant qu'agent d'attaque chimique.

20. Procédé selon l'une quelconque des revendications précédentes, comprenant en outre l'incorporation du matériau cristallin photonique dans un dispositif de sécurité.
